# EUROPEAN PATENT APPLICATION

(11) **EP 2 875 935 A1**
(43) Date of publication of application: **27.05.2015**
(21) Application number: 13460081.6
(22) Date of filing: 13.12.2013
(51) Int. Cl.: B29C 67/00

(54) **Device for 3D printing**

(30) Priority: 25.11.2013 PL 40623413
(71) Applicant: Przemyslowy Instytut Automatyki i Pomiarow PIAP, 02-486 Warszawa (PL)
(72) Inventor: Cader, Maciej, 05-220 Zielonka (PL); Rózycki, Lukasz, 01-858 Warszawa (PL)

(57) **Abstract**

Device for additive model manufacturing by applying model and support material to model table, equipped with a vertically movable table model, the model table (1) being equipped with a worktop for models being built situated on it and moving horizontally (3) and / or rotationally, coupled with a drive system by linear and / or rotary movements (2); which are controlled by the control system, furthermore device is equipped with two heads (4) for applying the model material.

## Description

The subject of invention is device for additive model manufacturing by applying model and support material which indurate after application to model table.

This type of Device known as 3D printer implements a process manufacturing three-dimensional physical objects based on a computer model are known for a long time. In these easy to access machines for additive manufacturing, namely 3D printing, on vertically moving model table is applied liquefied material. The model table is lowered by following equal thicknesses of single material layer.

On the market is available "Omni3D Architect" printer offered by the company Omni3D LLC Poland, working according to mentioned above method. Similar devices intended for additive three-dimensional physical model manufacturing are descried in GB 2502116, WO 2009/088420 A1 and WO 2009/088425 A1 specification. The efficiency of these devices is limited due to the fact that the model table only moves in one vertical direction.

The subject of invention is device for additive model manufacturing by applying model and support material which indurate after application to model table, with increased effectiveness compared to devices of this type.

The device for additive model manufacturing by applying model and support material by head, which indurate after application to model table is equipped with a vertically movable table model, moreover model table with worktop for models being built situated on moving horizontally and I or rotationally, coupled with a drive system by linear and / or rotary movements, which are controlled by the control system/furthermore device is equipped with two heads for applying the model material.

The invention is illustrated on picture which shows the scheme of device for additive model manufacturing.

The device is equipped with linear drive system 2 and slide 3 with a crane, to which is attached worktop 1. Linear drive system 2, controlled by control system, in particular from computer causing linear movement of model table 1. Alternatively or additionally, the device may be equipped with a rotary drive system. Furthermore, the device is equipped with two heads 4 supplying model material.

Device is equipped with linear drive system to relatively rotatable drive system or both systems at the same time, so that the table becomes a table model with increased mobility, because despite of horizontal movement in addition also enables to vertical movement, it has allowed for an increase in performance, compared to known devices. Device is equipped with few heads supplying model material, allowing for construction of models from many differenf materials.

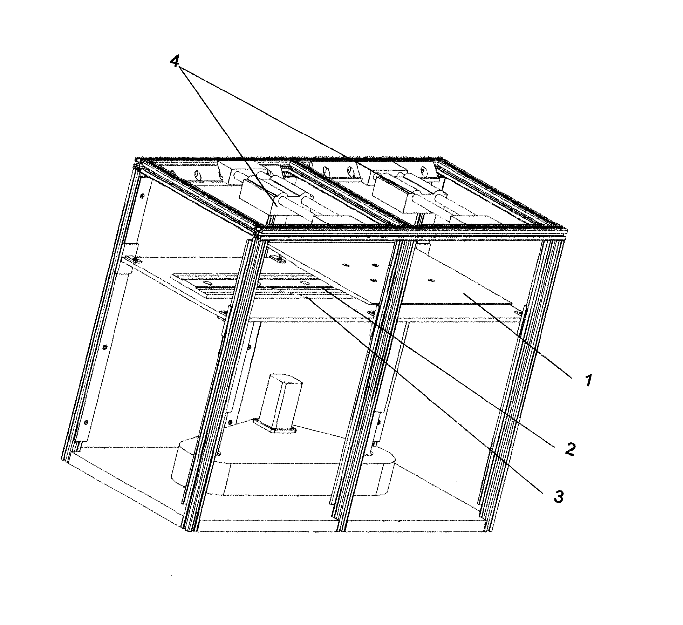

## Claims

1. Device for additive model manufacturing by applying model and support material to model table, equipped with a vertically movable table model, is **characterized by** model table (1) equipped with worktop for models being built situated on moving horizontally (3) and I or rotationally coupled with a drive system by linear and / or rotary movements (2); which are controlled by the control system, furthermore device is equipped with two heads (4) for applying the model material.
